# EUROPEAN PATENT APPLICATION

(11) **EP 4 592 184 A1**
(43) Date of publication of application: **30.07.2025**
(21) Application number: 25154102.5
(22) Date of filing: 27.01.2025
(51) Int. Cl.: B64D 13/06, B64D 15/04

(54) **ICE PROTECTION USING REGENERATIVE HIGH TEMPERATURE EXHAUST AIR**

(30) Priority: 26.01.2024 IN 202411005394
(71) Applicant: Goodrich Corporation, Charlotte, NC 28217-4578 (US)
(72) Inventor: GOWDA, Anagha Shivaprakash, Bangalore (IN); KANOJIA, Anupam, Jabalpur (IN)
(74) Representative: Dehns

(57) **Abstract**

Aircraft and aircraft ice protection systems include an aircraft environmental control system (120) having a heat exchanger (122), a supply line (118) fluidly connecting an output of the heat exchanger to a component ice protection element (208) associated with a component of an aircraft, a primary control valve (128) arranged along the supply line, and a controller (124) configured to control operation of the primary control valve to supply air from the heat exchanger along the supply line to the component ice protection element.

## Description

### CROSS-REFERENCE TO RELATED APPLICATIONS

This application claims the benefit of Indian Application No. 202411005394, filed January 26, 2024invention.

### BACKGROUND

The subject matter disclosed herein generally relates to ice protection systems and, more particularly, to aircraft ice protection systems using regenerative high temperature exhaust air.

Aircraft require de-icing and/or ice protection to prevent the build up of ice on external surfaces of the aircraft, including flight control surfaces (e.g., flaps, slats, ailerons, rudders, spoilers, etc.), wing structures, and/or fuselage structures. During flight, an aircraft may be subject to conditions wherein ice accumulates on component surfaces of the aircraft such as wings, struts, airfoils, etc. If unchecked, such accumulations can laden the aircraft with additional weight and may alter configurations of the wings and/or control surfaces of the aircraft in a detrimental fashion. Efforts to prevent and/or remove such accumulations of ice under flying conditions has resulted in three generally universal approaches to removal of accumulated ice, a process known generally as de-icing.

One process is thermal de-icing, wherein portions of an airfoil, such as a leading edge, are heated to loosen adhesive forces between accumulating ice and the aircraft component. Once loosened by thermal conditions, the ice can be blown from the aircraft component by the airstream passing over the aircraft. Another process for de-icing involves chemicals. A chemical can be applied or supplied to all or part of an aircraft to depress adhesion forces associated with ice accumulation upon the aircraft or to depress the freezing point of water collecting upon surfaces of the aircraft. The third method is termed mechanical de-icing. Mechanical de-icing may employ various mechanisms such as electromechanical hammering, overlapping flexible ribbon conductors employing an electrorepulsive force between conductors, and pneumatic de-icing.

Bleedless aircraft configurations are being developed where little to no air is bled from an aircraft engine. By eliminating the bleed air as a source of hot and/or compressed air (e.g., for thermal and/or pneumatic de-icing), other sources of de-icing are required. For example, bleedless aircraft systems may rely on electrical power for applications that previously relied on bleed air. The electrical power consumption can be reduced and/or avoided by using alternate sustainable means to ensure that aircraft surfaces are above freezing points. Additionally, with the push towards bleedless aircraft systems there is a need to find alternatives for systems that previously relied on bleed air.

### SUMMARY

According to one aspect, aircraft ice protection systems are provided. The aircraft ice protection systems include an aircraft environmental control system having a heat exchanger, a supply line fluidly connecting an output of the heat exchanger to a component ice protection element associated with a component of an aircraft, a primary control valve arranged along the supply line, and a controller configured to control operation of the primary control valve to supply air from the heat exchanger along the supply line to the component ice protection element.

Embodiments of the aircraft ice protection systems may include a pressure booster arranged along the supply line and configured to boost a pressure of the supplied air prior to being supplied to the component ice protection element.

Embodiments of the aircraft ice protection systems may include that the pressure booster is a fan.

Embodiments of the aircraft ice protection systems may include that the pressure booster is a pump.

Embodiments of the aircraft ice protection systems may include that the controller comprises a pressure controller configured to control operation of the pressure booster.

Embodiments of the aircraft ice protection systems may include a secondary control valve arranged along the supply line between the primary control valve and the component ice protection element, wherein the secondary control valve is selectively controllable by the controller to supply air to the component ice protection element.

Embodiments of the aircraft ice protection systems may include a supplemental heater arranged along the supply line and configured to increase a temperature of the supplied air prior to being suppled to the component ice protection element.

Embodiments of the aircraft ice protection systems may include that the controller comprises an airflow controller configured to control operation of the primary control valve.

Embodiments of the aircraft ice protection systems may include an ice detection sensor arranged to detect an ice formation condition associated with the component of the aircraft.

Embodiments of the aircraft ice protection systems may include that the component of the aircraft is a nacelle.

Embodiments of the aircraft ice protection systems may include that the component of the aircraft is an aircraft flight control element.

According to some aspects, aircraft are provided. The aircraft include a fuselage and wings, a plurality of aircraft components arranged on the fuselage and wings, an environmental control system configured to generate treated air for supply into a cabin of the aircraft, the environmental control system having a heat exchanger configured to receive ram air as a first fluid and treated ram air as a second fluid, and an aircraft ice protection system. The aircraft ice protection system includes a plurality of ice protection elements, wherein each ice protection element is associated with one or more aircraft components, a supply line fluidly connecting an output of the first fluid of the heat exchanger to the component ice protection elements, a primary control valve arranged along the supply line, and a controller configured to control operation of the primary control valve to supply the first fluid from the heat exchanger along the supply line to the component ice protection element.

Embodiments of the aircraft may include a pressure booster arranged along the supply line and configured to boost a pressure of the first fluid prior to being supplied to the component ice protection element.

Embodiments of the aircraft may include that the controller comprises a pressure controller configured to control operation of the pressure booster.

Embodiments of the aircraft may include a secondary control valve arranged along the supply line between the primary control valve and the component ice protection element, wherein the secondary control valve is selectively controllable by the controller to supply the first fluid to the component ice protection element.

Embodiments of the aircraft may include a supplemental heater arranged along the supply line and configured to increase a temperature of the first fluid prior to being supplied to the component ice protection element.

Embodiments of the aircraft may include that the controller comprises an airflow controller configured to control operation of the primary control valve.

Embodiments of the aircraft may include an ice detection sensor arranged to detect an ice formation condition associated with the component of the aircraft.

Embodiments of the aircraft may include that the aircraft components include at least one of a nacelle of an engine and an aircraft flight control element.

Embodiments of the aircraft may include that the environmental control system comprises a cabin air compressor, wherein the treated ram air is output from the cabin air compressor and supplied into the heat exchanger at an elevated pressure and temperature compared to the first fluid.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present invention are apparent from the following detailed description taken in conjunction with the accompanying drawings in which:
FIG. 1A is a schematic illustration of an aircraft incorporating embodiments of an ice protection system in accordance with the present invention;
FIG. 1B is a schematic illustration of a portion of an ice protection system of the aircraft of FIG. 1A;
FIG. 2 is a schematic diagram of an ice protection system in accordance with an embodiment of the present invention; and
FIG. 3 is a flow process for operating an ice protection system in accordance with an embodiment of the present invention.

### DETAILED DESCRIPTION

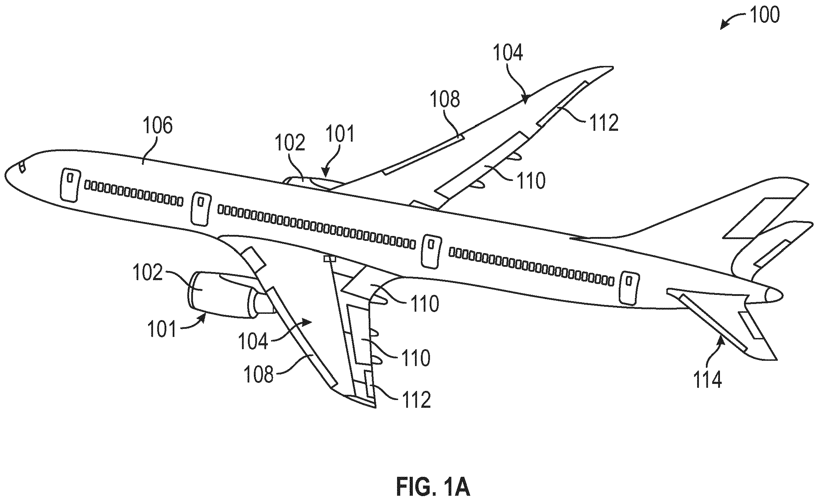

FIG. 1A illustrates an example of an aircraft 100 having aircraft engines 101 surrounded by (or otherwise carried in) nacelles 102. The aircraft 100 includes wings 104 that extend from an aircraft fuselage 106. Each wing 104 may include one or more slats 108 on a forward edge or leading edge and one or more flaps 110 on an aft, rear, or trailing edge thereof. The wings 104 may also include ailerons 112 on the trailing edges, as will be appreciated by those of skill in the art. The aircraft 100, as shown, includes a tail structure 114 which can include various flaps, ailerons, slats, and the like, as will be appreciated by those of skill in the art. The flaps, slats, ailerons, and the like are generally referred to herein as "aircraft flight control elements" as they are movable under aircraft power systems and are configured to control flight and motion of the aircraft 100. The aircraft flight control elements 108, 110, 112, etc., the wings 104, the tail structure 114 and/or other parts of the aircraft fuselage 106 may have ice build up during operation (e.g., in cold temperature environments and/or during flight). To prevent and/or remove any ice build up, the aircraft 100 may include an ice protection system, which can include heaters, pneumatic systems, chemical systems, or the like, as will be appreciated by those of skill in the art.

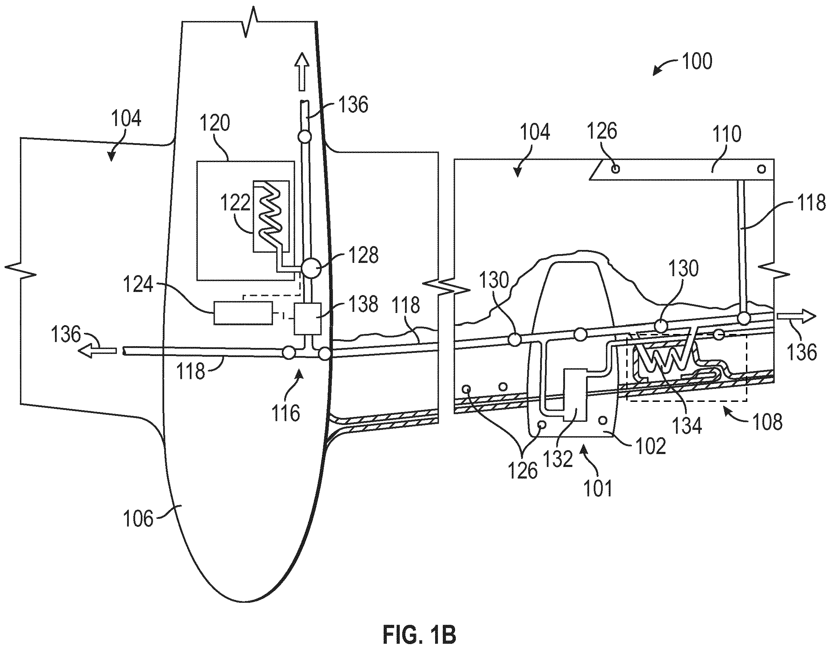

For example, with respect to FIG. 1B, a schematic illustration of a portion of an ice protection system 116 in accordance with an embodiment of the present invention as installed on the aircraft 100 is shown. The ice protection system 116 is configured to supply warm air through a supply line 118 to various structures and/or components of the aircraft 100 to enable a de-icing operation and/or provide warm air to prevent ice accretion and/or build up on the structures and/or components. The ice protection system 116, in accordance with embodiments of the present invention, is configured to be a bleedless system, where warm air is not bled from the engines, and thus no losses associated therewith are incurred. However, because the engine is no longer a source of warm air for de-icing, the ice protection system 116 is configured to receive warm air from an aircraft environmental control system 120.

The environmental control system 120 includes a heat exchanger 122 that thermally couples ambient air intake air of the environmental control system 120 as a first working fluid with ram air as a second working fluid. In operation, the first working fluid (cabin air) is cooled by heat pick-up from the ram air, thus warming the second working fluid (ram air). The treated working fluid is then supplied into a cabin of the aircraft 100 for environmental control purposes, as will be appreciated by those of skill in the art. In conventional configurations, the second working fluid (ram air) is typically dumped overboard and exhausted back to ambient.

However, in accordance with embodiments of the present invention, rather than dumping the heated ram air overboard, the heated ram air is selectively directed into the supply line 118 of the ice protection system 116 to provide heating to various components of the aircraft 100. The ice protection system 116 includes a controller 124 that is configured in communication with one or more ice detection sensors 126 that are distributed throughout the aircraft 100 and may be associated with one or more aircraft flight control elements (e.g., elements 108, 110, 112), portions of the wings 104, portions of the engines 101, and/or portions of the aircraft fuselage 106. The ice detection sensors 126 may be configured to detect ice build up and/or a temperature of a monitored component. In some configurations, the ice detection sensors 126 may be a collection of multiple individual sensors such as ice build up detection, thermal detectors monitoring temperatures of components/parts of the aircraft 100, and/or thermal detectors monitoring temperatures of air within the supply line 118 at a location of interest (e.g., associated with an aircraft flight control element or the like).

The controller 124 may be configured to selectively control one or more valves associated with the ice protection system 116 for the purpose of supplying warm air from the heat exchanger 122 of the environmental control system 120 to one or more locations throughout the aircraft 100. For example, a primary control valve 128 may be arranged to provide a supply of warm air from the heat exchanger 122 of the environmental control system 120 into the supply line 118. The controller 124 may be configured to, for example, open and close the primary control valve 128 to permit the warm air from the heat exchanger 122 to enter into the supply line 118. In an off or closed state, the primary control valve 128 prevents air from entering the supply line 118. In such a state, the air from the heat exchanger 122 of the environmental control system 120 may be dumped overboard.

In the on or open state of operation, the primary control valve 128 allows for warm air from the heat exchanger 122 to enter the supply line 118 to be distributed to locations that may require de-icing and/or warming for the prevention of ice build up. To ensure the appropriate amount of air and/or selective application of de-icing is provided, the ice protection system 116 includes optional secondary control valves 130. The secondary control valves 130 may be arranged along the supply line 118 to control flow of air from the heat exchanger 122 to one or more ice protection elements associated with various parts of the aircraft 100. For example, as shown in this non-limiting schematic illustration, the nacelle 102 housing the engine 101 can include an associated nacelle ice protection element 132 and the slat 108 can include an associated slat ice protection element 134. The secondary control valves 130 may be selectively operable for directing a portion of warm air from the heat exchanger 122 to the associated ice protection elements 132, 134 or others, such as associated with the flaps 110, the tail structure 114, or the like. In accordance with embodiments of the present invention, the primary control valve 128 and the secondary control valves 130 may be selectively operable to have a graduated opening to control an amount of air that passes through the respective valves. For example, in some embodiments, the valves 128, 130 may be controlled to allow air flow of any percentage (e.g., 0% is fully closed, 100% if fully open, and anywhere between).

When the primary control valve 128 and an associated secondary control valve 130 are opened, warm air may be directed into and/or through a portion of the supply line 118 associated with a component or structure of the aircraft 100 to be de-iced. In some embodiments or operational conditions, all secondary control valves 130 may be opened simultaneously to allow for warm air to be distributed throughout the ice protection system 116. In other embodiments, or under other operational conditions, some sub-set of the secondary control valves 130 may be opened such that warm air is provided only to selected locations of the ice protection system 116. The control operation may be controlled by the controller 124 in response to information or data received from the ice detection sensors 126. Although shown with only a portion of the aircraft 100 shown in FIG. 1B, the supply line 118 of the ice protection system 116 may extend throughout the aircraft 100 to other locations such as the other wing, the end of the illustrated wing, and/or the tail portion, as indicated by arrows 136 of FIG. 1B.

In some configurations, and as shown in FIG. 1B, the ice protection system 116 may include a pressure booster 138. The pressure booster 138, as shown, is located downstream from the primary control valve 128 along the supply line 118. In other embodiments, the pressure booster 138 may be arranged upstream from the primary control valve 128 along the supply line 118. That is, in some embodiments, the pressure booster 138 may be arranged between the heat exchanger 122 of the of the environmental control system 120 and the primary control valve 128. The pressure booster 138 may be a fan, a pump, or the like, that is configured to increase a pressure and/or flow rate of the warm air within the supply line 118 to ensure necessary flow of warm air throughout the ice protection system 116. The controller 124 of the ice protection system 116 may be operably connected to the pressure booster 138 to control operation thereof. For example, the controller 124 may control the pressure booster 138 to increase a pressure and/or flow rate of the heated air from the heat exchanger 122 of the environmental control system 120 to levels sufficient to supply warm air to specific locations along the supply line 118 of the ice protection system 116. After the warm air is passed through the supply line 118 to one or more ice protection elements 132, 134 to prevent ice build up and/or remove formed ice, the air may be dumped overboard to ambient.

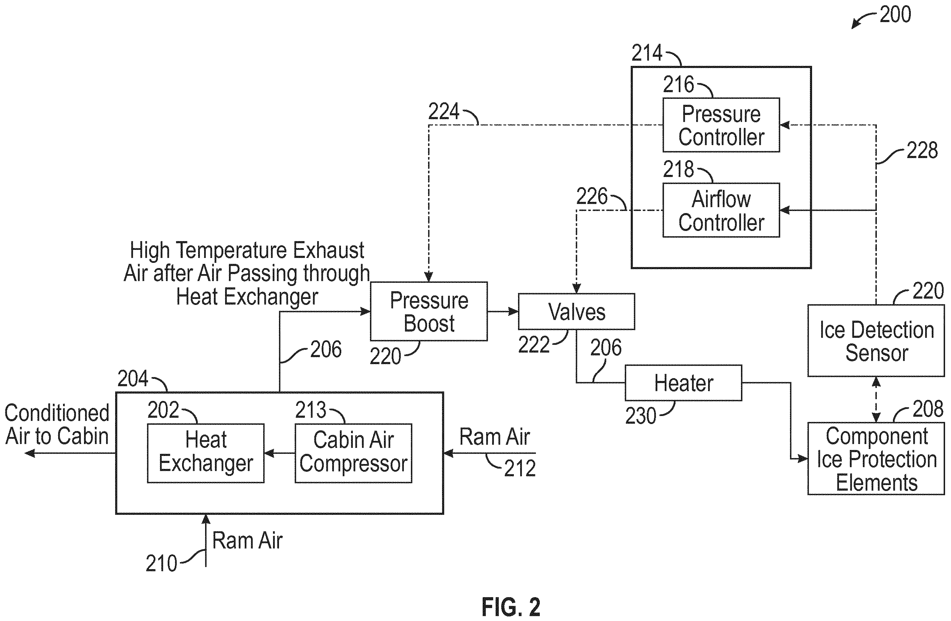

Referring now to FIG. 2, a schematic diagram of an ice protection system 200 in accordance with an embodiment of the present invention is shown. The ice protection system 200 may be incorporated onboard an aircraft, such as shown and described above with respect to FIGS. 1A-1B. The ice protection system 200 is configured to selectively source hot air from a heat exchanger 202 of an environmental control system 204. The hot air is supplied along a supply line 206 that originates at the heat exchanger 202 and fluidly connects to one or more component ice protection elements 208. The ice protection elements 208 are structures or portions of the supply line 206 that pass through, within, or are otherwise arranged to receive hot air and distribute the hot air to locations on an aircraft component (e.g., aircraft flight control elements) to prevent ice build up and/or formation thereon. The ice protection elements 208 may be passages, channels, conduits, cavities, or the like that are configured to receive heated air and allow for warming of an associated aircraft structure (e.g., aircraft flight control elements). In some configurations, the ice protection elements may be arranged as tubing wound about a structure, may be channels or tubing embedded within a structure, may be tubing or the like with heat dissipators (e.g., fins) for supplying warm air into a cavity or the like to provide internal heating of a space, or the like, as will be appreciated by those of skill in the art.

To generate the hot air that is used by the ice protection system 200, a first flow of air 210 is introduced into the environmental control system 204 and passed through the heat exchanger 202 thereof. Within the heat exchanger 202, the first flow of air 210 is thermally coupled with a second flow of air 212. The heat exchanger 202 may be an environmental control system ram air heat exchanger configured to condition the second flow of air 212 for supply into a cabin or other occupied portion of the aircraft. As the second flow of air 212 is thermally treated, the first flow of air 210 is heated through heat pick up. The first flow of air 210 at the outlet or exit of the heat exchanger 202 is directed into the supply line 206 at an elevated temperature. For example, and without limitation, in accordance with some embodiments, the first flow of air 210, at the outlet of the heat exchanger 202, may have an average temperature of 100 °F (37.8 °C150) or greater and a flow rate of 150 lb/min (1.13kg/s) or greater. It will be appreciated that the temperature and flow rate of the air output from the heat exchanger may be different than this example configuration, and in some embodiments may have an average temperature of 150 °F (65.6 °C) and a flow rate of 200 lb/min (1.5kg/s). It will be appreciated that a minimum temperature of above freezing is desired to ice protection. Accordingly, the output air from the heat exchanger 202 may be any temperature greater than 32 °F (0 °C), although it may be preferred to have the air have higher temperatures to ensure ice protection, as will be appreciated by those of skill in the art.

It is noted that in a conventional environmental control system, bleed air from an engine, which is high pressure and high temperature air, is passed through a ram heat exchanger where the heat exchange takes place between the hot bleed air and relatively cold air (e.g., ram air). In such a configuration, the second flow will be sent to an air cycle machine, which is a sub-system of the environmental control system, for conditioning the air which is eventually supplied to occupied parts of the aircraft (e.g., cabin and cockpit). However, in a no-bleed system such as employed by embodiments of the present invention, the relatively hot bleed air is not available for heat exchange. Accordingly, in accordance with embodiments of the present invention, one or more cabin air compressors 213, which are a sub-system of the environmental control system 204, are used to replace the bleed air operation. In such configurations, the cabin air compressors 213 will receive ram air (second air flow 212) and compress the ram air to high temperature and pressure. This hot fluid is then supplied to the heat exchanger 202 where the heat exchange takes place between the relatively hot heated output air from the cabin air compressor 213 (second air flow 212) and the relatively first air flow 210, which may be untreated or uncompressed ram air.

The ice protection system 200 includes a controller 214 which includes a pressure controller 216 and an airflow controller 218. Although schematically shown with the pressure controller 216 and the airflow controller 218 as two distinct parts of the controller 214, in some embodiments these two controllers may be software implemented and thus may be software components of the controller 214, and not necessarily separate physical components. In some embodiments, the pressure controller 216 and the airflow controller 218 may be separate physical control elements or components. Furthermore, the controller 214 may be a dedicated control system or component or may be integrated into another controller onboard an aircraft. The controller 214 (and/or components thereof) may be in operable connection and/or communication with ice detection sensors 220 that are associated with the ice protection elements 208 and/or surfaces or portions of aircraft components that may be subject to icing (e.g., aircraft flight control elements or the like, as described above). In response to a detection of icing or icing conditions at the ice detection sensors 220, the controller 214 is configured to direct warm air from the environmental control system 204 to locations where icing occurs or may occur (e.g., preventative).

The determination of ice formation or anticipation of ice formation may be implemented within the ice detection sensors 220, the controller 214, or a combination thereof. For example, and without limitation, the ice detection sensors 220 may be temperature sensors that are arranged to monitor a temperature of a surface of an aircraft flight control element. A preset threshold temperature value may be set to cause an alert or signal to be sent from the ice detection sensor 220 to the controller 214. The selected temperature may be a temperature at which ice may start forming on the surface of the monitored aircraft flight control element. If the threshold temperature is reached, the controller 214 may caused delivery of hot air to increase a temperature of the monitored surface. In other embodiments, an ice detection sensor maybe arranged to detect the formation of ice on a surface. If the formed ice reaches a threshold thickness (which is inclusive of detection of any ice), then a signal may be received at the controller 214 and prompt supply of hot air to the location/component with the detected ice. It will be appreciated that other measurement and/or detection methods of ice formation and/or anticipate ice formation may be used without departing from the scope of the present invention.

Upon detection that a supply of heated air should be supplied to an ice protection element 208, the controller 214 may control operation of a pressure booster 220 and/or one or more valves 222. As shown in this illustrative configuration, the pressure booster 220 is arranged upstream from the valves 222 along the supply line 206, as compared to the configuration shown in FIG. 1B. The valves 222 may include one or more primary control valves and one or more secondary control valves. For example, a primary control valve may be configured to control a total supply of air from the heat exchanger 202 into the supply line 206 for distribution to one or more ice protection elements 208. In such a configuration, one or more secondary control valves may be arranged along the supply line 206 at locations to control a flow of air to one or more ice protection elements 208 such that a specific supply of air may be provided to one or more specific locations determined by the controller 214 and based on information obtained from the ice detection sensors 220.

In one non-limiting example, the pressure controller 216 of the controller 214 may be operably connected to the pressure booster 220 and the airflow controller 218 may be operably connected to the valves 222 by respective communication lines 224, 226. Similarly, a communication line 228 may connect the ice detection sensors 220 to the controller 214 (and/or the sub-controllers 216, 218). In other configurations, the two controllers 216, 218 may be separate or independent control elements, and not specifically integrated into a single control configuration. In such configurations, dedicated communication lines maybe used to connect the various components, as will be appreciated by those of skill in the art.

In some configurations, and as illustratively shown, an optional supplemental heater 230 may be arranged along the supply line 206 and may be controllable by the controller 214 (or a control element thereof). The supplemental heater 230 may be used to boost a temperature of the air within the supply line 206 beyond the temperature output from the heat exchanger 202. The heater 230 may be an electric heater or other type of heater. For example, in a non-limiting example, a portion of the air from the heat exchanger 202 may be diverted directed to the supplemental heat 230 which may be associated with an ice protection element 208 that is far from the source of the heated air (i.e., heat exchanger 202). As the air flows along the supply line 206, the air may lose temperature and thus supplemental heating may be required prior to supply into the ice protection element 208. Although shown in FIG. 2 with the supplemental heater 230 arranged between the valves 222 and the ice protection elements 208, in other configurations the supplemental heater 230 may be arranged at any location along the supply line 206 that is downstream from the heat exchanger 202. Furthermore, in some configurations multiple supplemental heaters 230 may be provided throughout the ice protection system 200 to ensure a desired air temperature is maintained for di-icing operations.

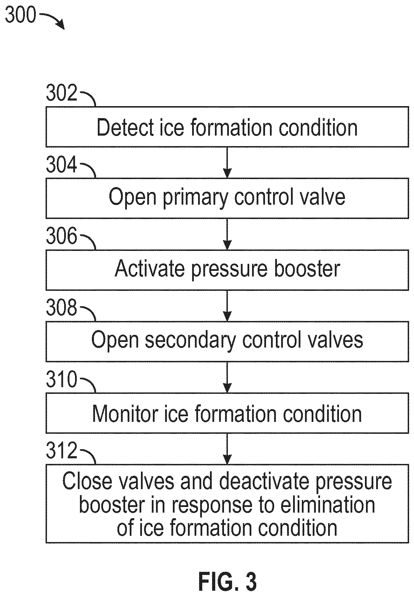

Referring now to FIG. 3, a schematic flow process 300 for operation of an aircraft ice protection system in accordance with an embodiment of the present invention is shown. The flow process 300 may be implemented by one or more controllers of the aircraft ice protection system, such as shown and described above. The ice protection system is arranged as described above, with a fluid connection from the output of a heat exchanger of an environmental control system to one or more ice protection elements associated with structures of the aircraft (e.g., aircraft flight control elements). A supply line provides a path from the heat exchanger to the one or more ice protection elements. At least one primary control valve and a pressure booster are arranged immediately downstream from the heat exchanger and are controllable to control an amount of air (e.g., airflow, pressure) supplied into a supply line. Optional secondary control valves may be arranged along the supply line to allow for controlled supply of heated air to specific locations onboard an aircraft. Ice detection sensors are arranged at specific locations to monitor for ice formation and/or conditions for ice formation (e.g., temperatures approaching the freezing temperature of water).

At block 302, an ice formation condition is detected by one or more ice detection sensors. The ice formation condition may be a detection of physical ice build up on a monitored surface. The ice formation condition may be set with a threshold related to weight of ice formed, thickness of ice formation, detection of any ice formation, or the like. In some embodiments, the ice formation condition may be detection of a temperature of a monitored component that is at a temperature which will cause ice to form or is about to form (e.g., close to freezing temperatures). In some embodiments, the ice formation condition may be a combination of detection of external temperatures, external water content in the air, internal or component temperatures, flight conditions, during of flight, or the like, with one or more thresholds set for individual components, sets or groups of components, or for the entire aircraft. When the controller receives information from the ice detection sensors that an ice formation condition is present, the process 300 proceeds to blocks 304-308.

At block 304, the controller will control a primary control valve to open. The primary control valve may be an on/off type valve with an open state and a closed state or may be a variable-type valve which allows for a controlled amount of air (e.g., amount of airflow) through the primary control valve into the supply line. At block 306, an optional pressure booster may be activated to boost a pressure of the air within the supply line. The pressure booster may be a fan, a pump, or the like and may increase a pressure and/or motive force imparted to the air within the supply line. At block 308, one or more optional secondary control valves may be opened or otherwise controlled to allow for heated air to be directed to a specific location where the ice formation condition has been detected. It will be appreciated that in some embodiments, the pressure booster and the secondary valves may be omitted. In such a configuration, upon detection of an ice formation condition, the primary control valve may be opened to allow heated air from the heat exchanger of the environmental control system to be supplied into the supply line and provided to the various components for preventing ice accumulation, formation, or the like. As noted above, in some embodiments, after warming a component or other feature, the air may be dumped overboard (e.g., exhausted to ambient).

At block 310, during the operations of blocks 304-308, the controller may be used to monitor the ice formation condition. The monitoring of block 310 may be implemented by the controller in communication with the ice detection sensors. The monitoring may be for a threshold temperature being exceeded (e.g., heating), for detection of melted ice (e.g., ice monitoring), or other parameter associated with ice formation.

At block 312, as ice is melted and/or removed and/or a monitored component temperature is heated outside of the threshold for ice formation, the controller may deactivate the ice protection system by closing the primary control valve, deactivating the pressure booster, and/or closing the secondary control valves. That is, upon elimination of the ice formation condition, the ice protection system may transition to an inactive state where no air is passed into and through the supply line of the ice protection system. In such states, the exhaust from the heat exchanger of the environmental control system may be dumped directly overboard or used for other purposes onboard the aircraft.

Advantageously, embodiments described herein provide aircraft ice protection systems that do not rely on bleed air for operation. Further, in some configurations, electrical demands and power consumption may be substantially limited through operation of the ice protection systems described herein. That is, in some embodiments, the only power required for de-icing may be for control operations, powering a pressure booster, and controlling operation of valves. The energy typically needed for heating air or directly heating a component is eliminated as the heat is provided within the heat exchanger of the environmental control system. Furthermore, power consumption may be reduced by only operating the de-icing and ice protection system on demand, thus only requiring power for the ice detection sensors, controllers, communication until needed to perform de-icing or ice protection.

Embodiments of the present invention may be incorporated onboard conventional aircraft or on bleedless aircraft systems. Such bleedless sytems typically rely on electrical power for applications that previously relied on bleed air (e.g., electrical heaters, etc.). The electrical power consumption can be reduced or avoided by using alternate sustainable means to ensure that aircraft surfaces are above freezing points, such as described herein. In accordance with embodiments of the present invention, heated air is sourced from the output of a heat exchanger of an aircraft environmental control system. This output is conventionally dumped overboard after being used to condition the cabin air that is generated and output by the environmental control system. Rather, embodiments of the present invention divert this hot air into a supply line for de-icing and/or ice protection purposes, as described above.

In an example operation of a system in accordance with the present invention, ambient air is taken into the environmental control system to condition the air and then the conditioned air is supplied to a cabin of the aircraft. The conditioning is achieved with a second flow of air, which may be sourced from a ram duct or the like. This second flow will be hot as it exits the heat exchanger of the environmental control system. The high temperature exhaust air may have an average temperature and flow rate of 150 °F (65.6°C) and 200 lb/min (1.5kg/s) coming out from the environmental control system ram heat exchanger. In other configurations, the temperature of the air may be any temperature above freezing. The flow rates of a given system in accordance with embodiments of the present invention may be determined based on the specific application, system dynamics and configurations, and/or based on other considerations, as will be appreciated by those of skill in the art. Additionally, it will be appreciated that as long as the air received from the heat exchanger is above the freezing point, the air may be used for de-icing purposes, and thus embodiments of the present invention are not limited to the above example average temperature. This high temperature air can be directed to specific locations to provide de-icing and/or ice formation prevention, as described above.

In operation, an ice protection system in accordance with embodiment of the present invention employ one or more ice detection sensors to detect ice formation or conditions for ice formation. The ice detection sensors provide information, data, or signals to a controller that includes processing capability to make determinations regarding ice formation or ice formation conditions. For example, in some configurations, the information may be as simple as a measured temperature exceeding (or being below) a predetermined limit. In other configurations, a computation of various inputs may be used, such as temperature of air output from heat exchanger, temperature of component, ambient air temperature, moisture content in ambient air, altitude, or the like. Based on the detection of ice formation or ice formation conditions, the controller will control two parameters. The controller will control a valve modulation, with the controller modulating the valve to allow for air flow to supply hot air into the ice protection system from the heat exchanger of an environmental control system. Additionally, the controller may control a pressure booster element (e.g., fan or pump) to ensure a proper air pressure is provided within the supply line to the ice protection elements associated with an aircraft component. Such controls can include controlling a fan speed or pressure differential. The controller will open valves based on the controller input to draw the high temperature exhaust air to pass through the supply line and provide heat to an ice protection element or the like. The pressure booster is controlled to ensure that the exhaust air is pressurized according to pressure demands for ensuring ice protection (e.g., flow rates to ensure proper heating of components of the aircraft). It will be appreciated that the primary consideration for an ice protection system is air temperature, while pressure and flow conditions may vary depending upon the type of system being used and/or ice protection demand (e.g., number and location of ice protection elements are activated at a given time onboard and aircraft ) For example, the pressure of air may be controlled to about 20-25 psi (138 kPa - 172 kPa). In accordance with some embodiments, the whole system may be configured as a continuous feedback loop which runs until the ice detection sensor(s) detects no ice/or indicates that critical areas are ice free. That is, for example and as described with respect to FIG. 3, the process will supply heated air until an ice formation condition is not detected by the ice detection sensors.

Embodiments of the present invention provide for systems which use high temperature exhaust air of an environmental control system for applications such as ice protection systems. Current ice protection systems rely on other mechanisms, such as electric blanket heaters for no bleed aircrafts or bleed air for bleed aircrafts. By directing a portion of hot air (exhausted) from an environmental control system, embodiments of the present invention eliminate the need for use of bleed air and/or supplemental electrical powered systems. Further, by providing the primary control valve, as described above, a mechanism for selective supply of heated air (e.g., ram air) allows for selective operation while minimizing weight, electrical power demands, and eliminates bleed air for ice protection use.

Advantageously, embodiments of the present invention provide for aircraft ice protection systems that do not rely upon bleed air from an engine of the aircraft. By directing exhausted air from the environmental control system heat exchanger, the heat and energy may be harnessed to provide heated air to ice protection element for ice protection, ensuring that waste air is limited. Further, embodiments of the present invention provide for a solution that does not rely on fuel consumption. That is the ice protection systems described herein may be operated without fuel consumption and may be generally passive in nature, responding to detection of ice formation conditions or detected ice. Further, advantageously, by implementing systems as described herein, a di-icing and/or ice protection system does not require engine bleed, electric blanket heaters, or the like. As such, engine efficiencies may be improved compared to engine bleed-type systems and power consumption may be reduced compared to electric heater-type systems. As such, overall loading on electric systems and/or engine bleed may be reduced or eliminated. In terms of power savings, electrothermal ice protection systems may require at least 45-75kW of electric power and operate at a temperature range of 45 °F - 70 °F (7.2°C - 21.1 °C). By implementing embodiments of the present invention and by eliminating such electrothermal systems, power savings on the order of 45-75kW may be realized.

The use of the terms "a", "an", "the", and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the present invention has been described in detail in connection with only a limited number of embodiments, it should be readily understood that the present invention is not limited to such disclosed embodiments. Rather, the present invention can be modified to incorporate any number of variations within the scope of the invention as defined by the claims.

Accordingly, the present invention is not to be seen as limited by the foregoing description, but is only limited by the scope of the appended claims.

## Claims

1. An aircraft ice protection system comprising:
an aircraft environmental control system (120) having a heat exchanger (122);
a supply line (118) fluidly connecting an output of the heat exchanger to a component ice protection element (208) associated with a component of an aircraft;
a primary control valve (128) arranged along the supply line; and
a controller (124) configured to control operation of the primary control valve to supply air from the heat exchanger along the supply line to the component ice protection element.

2. The aircraft ice protection system of claim 1, further comprising a pressure booster (138) arranged along the supply line and configured to boost a pressure of the supplied air prior to being supplied to the component ice protection element.

3. The aircraft ice protection system of claim 2, wherein the pressure booster (138) is a fan.

4. The aircraft ice protection system of claim 2, wherein the pressure booster (138) is a pump.

5. The aircraft ice protection system of claim 2, wherein the controller (124) comprises a pressure controller configured to control operation of the pressure booster (138).

6. The aircraft ice protection system of any preceding claim, further comprising a secondary control valve arranged along the supply line between the primary control valve and the component ice protection element, wherein the secondary control valve is selectively controllable by the controller to supply air to the component ice protection element.

7. The aircraft ice protection system of any preceding claim, further comprising a supplemental heater (230) arranged along the supply line and configured to increase a temperature of the supplied air prior to being supplied to the component ice protection element.

8. The aircraft ice protection system of any preceding claim, wherein the controller comprises an airflow controller configured to control operation of the primary control valve.

9. The aircraft ice protection system of any preceding claim, further comprising an ice detection sensor (220) arranged to detect an ice formation condition associated with the component of the aircraft.

10. The aircraft ice protection system of any preceding claim, wherein the component of the aircraft is a nacelle (102).

11. The aircraft ice protection system of any of claims 1 to 9, wherein the component of the aircraft is an aircraft flight control element.

12. An aircraft comprising:
a fuselage (106) and wings (104);
a plurality of aircraft components (102) arranged on the fuselage and wings;
an aircraft ice protection system (116) as claimed in any preceding claim, the aircraft environmental control system configured to generate treated air for supply into a cabin of the aircraft, the heat exchanger configured to receive ram air as a first fluid and treated ram air as a second fluid; and
the aircraft ice protection system comprising:
a plurality of ice protection elements, wherein each ice protection element is associated with one or more aircraft components;
the supply line fluidly connecting an output of the first fluid of the heat exchanger to the component ice protection elements; and
the controller configured to control operation of the primary control valve to supply the first fluid from the heat exchanger along the supply line to the component ice protection element.

13. The aircraft of claim 12, wherein the aircraft components include at least one of a nacelle of an engine and an aircraft flight control element.

14. The aircraft of claim 12 or 13, wherein the environmental control system comprises a cabin air compressor (213), wherein the treated ram air is output from the cabin air compressor and supplied into the heat exchanger at an elevated pressure and temperature compared to the first fluid.
